# FASCICULE DE BREVET EUROPEEN

(11) **EP 0 338 884 B1**
(45) Date de publication et mention de la délivrance du brevet: **20.10.1993**
(21) Numéro de dépôt: 89400926.5
(22) Date de dépôt: 04.04.1989
(51) Int. Cl.: C12G 1/02

(54) **Cuve de vinification et procédé de vinification mettant en oeuvre cette cuve**
Weingärtank und verwendetes Verfahren
Vinification tank and vinification process using this tank

(30) Priorité: 19.04.1988 FR 8805166
(43) Date de publication de la demande: 25.10.1989
(73) Titulaire: Haulot, Olivier, F-44200 Nantes (FR)
(72) Inventeur: Haulot, Olivier, F-44400 Nantes (FR)

(56) Documents cités:
- FR-A- 2 405 300

## Description

La présente invention a pour objet une cuve de vinification permettant de respecter la fabrication traditionnelle du vin, et d'améliorer ses qualités aromatiques, gustatives, olfactives, et visuelles. L'invention a également pour objet un procédé de vinification mettant en oeuvre ladite cuve.

Les diverses opérations constituant l'élaboration d'un vin rouge ou vinification en rouge comprennent tout d'abord l'égrappage qui consiste à égrainer les baies de raisin afin d'éliminer la rafle essentiellement ligneuse qui pourrait altérer la finesse et le fruité du vin. Il est ensuite procédé au foulage qui a pour but de faire éclater les baies et permettre l'extraction du jus. Le foulage ne doit pas être trop poussé afin de ne pas broyer la peau ou la pellicule et les pépins ce qui pourrait également nuire à la qualité du vin.

A ce stade de la préparation, la vendange est alors placée dans une cuve de vinification, où va se produire la transformation du jus en vin. Cette transformation est essentiellement constituée par un phénomène de fermentation au cours de laquelle les sucres vont être convertis en alcool éthylique et en anhydride carbonique. Le jus ou moût se trouble, s'échauffe, et des bulles de gaz carbonique se dégagent.

Pendant la fermentation, on peut distinguer dans la cuve de vinification une pria se liquide et une phase solide, la phase liquide étant constituée par le jus ou moût, et la phase solide étant constituée par les peaux ou pellicules des baies, ou marc. Du fait des dégagements des bulles de gaz carbonique, le marc forme une galette, ou chapeau de marc, qui flotte au-dessus du jus.

Conjointement à la fermentation s'effectue une macération, ou échanges de matières aromatiques et colorantes, entre le marc et le moût, qui va en fait donner au vin rouge les caractères de goût et de couleur qui lui sont propres. On conçoit donc l'importance qu'il y a à favoriser ces échanges, et également à éviter que le chapeau de marc puisse lui-même être altéré par oxydation. Ceci explique ainsi la présence dans les cuves traditionnelles de grilles ou treillis maintenant immergé le chapeau de marc, ou bien encore l'opération de pigeage qui consiste à briser périodiquement et à immerger le marc dans le jus. L'hydratation permanente du chapeau de marc, par le jus, favorise son extraction ultérieure de la cuve.

Lorsque la fermentation est achevée, après une période de l'ordre de cinq à huit jours en moyenne, la phase liquide ou "vin de goutte" est tirée. Le marc est extrait de la cuve et soumis à une opération de pressurage afin d'en extraire le vin qu'il contient. Ce "vin de presse" plus riche en tanin et extraits secs que le vin de goutte, est soit traité à part, soit mélangé en assemblage avec le vin de goutte.

La méthode de vinification pour obtenir du vin blanc, ou vinification en blanc, diffère essentiellement de celle en rouge par le fait qu'après égrappage éventuel, la vendange est soumise à l'opération de pressurage, et c'est le jus seul qui sera placé en cuve de fermentation afin d'éviter toute coloration par les pellicules de baies, que celles-ci proviennent de raisins rouges à jus blanc ou de raisins blancs à jus blanc (vin dit "blanc de blanc").

Quelle que soit la méthode de vinification, la transformation du jus en vin est fondamentalement basée sur une fermentation alcoolique anaérobie ou transformation des sucres naturels du raisin (glucose et fructose) en alcool éthylique suivant la réaction :

C6 H12 O6 → 2(CO2) + 2(C2H5OH).

Cette équation permet de mettre en évidence la quantité importante de gaz carbonique qui accompagne la formation d'alcool. En effet, un calcul stoechiométrique pondéré par un rendement de conversion de 90 % permet de voir que la transformation d'un jus en 1 litre de vin titrant 12° d'alcool s'accompagne d'un dégagement d'environ 50 Normaux litres de gaz carbonique.

Cette équation ne traduit pas toutefois l'ensemble des phénomènes mis en jeu durant la fermentation, et qui imposent au viticulteur un contrôle continu de la vinification.

Ainsi, pour que la fermentation puisse avoir lieu, la présence de certaines levures est indispensable. Ces levures du type saccharomyces sont présentes naturellement sur les baies, mais leur activité catalytique dépend grandement de la température du milieu. Pour que la fermentation puisse démarrer, il faut que la température du jus ne soit pas inférieure à 15°C, la température optimale visée se situant entre 18°C et 20°C. Par ailleurs, la réaction de fermentation est exothermique, et de ce fait la température du jus va augmenter au cours du procédé, ce qui risque d'être préjudiciable aux levures elles-mêmes. En effet, leur croissance est fortement ralentie au-dessus de 38°C et elles sont détruites entre 40°C et 50°C. Dans ce cas, la conversion du sucre en alcool sera arrêtée et la teneur en sucre résiduel du vin sera trop élevée au détriment de son degré d'alcool, ce qui peut également favoriser une piqûre acétique.

En fait, pour la vinification en rouge, la température durant la fermentation est réglée entre 25°C et 30°C qui est une plage optimale pour la fermentation elle-même et également pour les transferts de matières par macération.

Pour la vinification en blanc, la température est un peu plus basse, afin de donner à ce type de vin ses caractéristiques propres, la température du jus est maintenue entre 18°C et 25°C.

Ces contraintes sont bien connues de l'homme de l'art, et pour cela, la plupart des cuves modernes de vinification comportent des échangeurs de chaleur permettant de réchauffer ou refroidir le jus afin de régler sa température à la valeur requise.

Si la présente de certaines espèces biochimiques telles que les levures saccharomyces, qui d'ailleurs sont naturellement indigènes dans les vignobles, sont indispensables pour le bon déroulement de la vinification, il importe de protéger le milieu de fermentation contre l'introduction incontrôlée d'air atmosphérique ; en effet une oxydation et un ensemencement parasite de bactéries peuvent entraîner des fermentations parallèles indésirables au détriment de la fermentation alcoolique, ou bien encore des réactions tout à fait nuisibles comme par exemple une fermentation aérobie acétique ou piqûres acétiques par des bactéries acétiques.

Pour satisfaire à ces diverses exigences, une installation de vinification doit permettre un réglage de la température du jus pour le démarrage de la fermentation, et en cours de fermentation ; un brassage du jus permet d'homogénéiser la température et également la répartition massique des réactions de fermentation. On favorise ainsi la macération du marc et du moût plus particulièrement pour la vinification en rouge. De plus, l'installation doit permettre une vinification dans un milieu anaérobique et aseptique, et avoir une souplesse d'utilisation afin de s'adapter au procédé traditionnel propre au vignoble ainsi qu'une exploitation et une maintenance simples et peu coûteuses.

On connaît par le FR-A-1.267.311, une cuve de vinification qui est divisée en deux parties par une cloison horizontale, la partie inférieure constituant la cuve effective de vinification dans laquelle s'opère la fermentation alcoolique, et la partie supérieure constituant un cuveau dans lequel le jus est périodiquement transféré pour descendre ensuite afin d'arroser le chapeau de marc. Le dispositif comporte également une colonne de remontage par laquelle le jus transite de la cuve vers le cuveau, un lessiveur comportant une garde hydraulique par lequel le jus peut s'écouler du cuveau vers la cuve en arrosant le chapeau de marc, et enfin une valve hydraulique par laquelle le gaz carbonique contenu dans la cuve peut s'échapper à l'atmosphère.

La garde hydraulique du lessiveur ainsi que celle de la valve ayant été préalablement emplies d'eau ou de jus, le gaz carbonique résultant de la fermentation alcoolique occasionne une augmentation de la pression du ciel gazeux régnant dans la cuve au-dessus de la vendange. Le jus monte par la colonne de remontage et se déverse dans le cuveau supérieur. Lorsque la pression de gaz carbonique dépasse la valeur correspondant à la hauteur maximale de la garde hydraulique de la valve, le gaz carbonique s'échappe directement à l'atmosphère ce qui produit une chute de pression dans la cuve, et le jus contenu dans le cuveau s'écoule par le lessiveur vers la cuve de fermentation en arrosant le chapeau de marc.

Ce dispositif présente un inconvénient quant à la couverture permanente du jus par le gaz carbonique. En effet, le jus présent dans le cuveau est couvert du seul anhydride carbonique résultant du dégazage s'opérant dans le cuveau, cette couverture de gaz carbonique étant elle-même en contact avec l'air atmosphérique. De ce fait, lors des mouvements de jus dans le cuveau et en particulier lors de la décharge à travers le lessiveur, il se produit une oxygénation non contrôlée du jus qui peut être préjudiciable à la qualité ultérieure du vin. En effet même si lors de certains procédés de vinification en rouge, il est procédé à des phases d'oxygénation du jus, celles-ci doivent être parfaitement maîtriser en débit et en qualité d'aseptie afin de maitriser les fermentations secondaires et de supprimer un ensemencement parasite avec des bactéries aérobies indésirables, telles que par exemple les bactéries acétiques. De plus, cette disposition entraîne dans le cuveau une perte par évaporation de l'alcool éthylique et des éléments aromatiques fondamentaux pour les caractères organoleptiques du vin.

Par ailleurs, on connaît par les FR-A-2 489 709 et FR-A-2 489 837, des cuves de vinification qui, comme dans le FR-A-1.267.311, comportent une cuve de fermentation et un cuveau supérieur de transfert de jus et d'arrosage ou de lessivage du chapeau de marc. La vidange du cuveau s'opère soit à l'aide d'un clapet-membrane souple comme dans le FR-A 2 489 709, soit à l'aide d'une vanne télécommandée comme dans le FR-A-2 489 837.

Dans ces documents, le remontage du jus est réalisé au moyen d'une colonne reliant la cuve au cuveau, ce dernier ayant été préalablement mis en dépression au moyen d'une pompe et d'un ensemble de clapets disposées sur la tête du cuveau. Lorsque le niveau dans le cuveau atteint une valeur fixée, un système de détection met en communication le cuveau avec la pression atmosphérique ce qui arrête alors la remontée du jus qui peut redescendre dans la cuve en arrosant le chapeau de marc, soit par l'ouverture automatique du clapet-membrane, soit par l'ouverture commandée de la vanne de communication.

La conception du cuveau et son fonctionnement sont tels, que lorsque la dépression est cassée, le jus lors de sa descente à travers l'orifice de lessivage aspire de l'air par la grille de communication du cuveau avec l'atmosphère, avec ainsi les mêmes risques d'oxygénation et d'ensemencement incontrôlés que dans le FR-A-1 267 311. De plus ces dispositifs mettent en oeuvre un appareillage compliqué tel que par exemple une pompe à vide, un ensemble de clapets et de vannes...

La présente invention vise à remédier à ces inconvénients tout en respectant au mieux les concepts de l'oenologie moderne et en permettant d'obtenir de manière naturelle et conforme à la tradition, le meilleur vin possible à partir de la vendange, en particulier le contrôle permanent des phases liquides et gazeuses, le contrôle des injections éventuelles de produits, et un milieu aseptique.

L'invention a donc pour objet une cuve de vinification comprenant une cuve inférieure de fermentation et un cuveau supérieur communiquant entre eux par un orifice de lessivage obturable et reliés par au moins une colonne de remontage du jus de la cuve de fermentation vers le cuveau, caractérisée en ce qu'elle comporte au moins un clapet mettant en communication de manière automatique et cyclique la cuve de fermentation et le cuveau et comprenant :
- un ensemble fixe adapté sur l'orifice de lessivage et formant un siège de clapet
- un équipage mobile se déplaçant verticalement et coopérant avec ledit siège de clapet,
- un flotteur mobile pouvant également se déplacer verticalement,
- des moyens d'étanchéité entre l'équipage mobile et le flotteur mobile,
- et des moyens de maintien de l'équipage mobile sur le siège de clapet en fonction de la hauteur du niveau du jus dans le cuveau détecté par ledit flotteur.

Selon une autre caractéristique de l'invention, l'ensemble fixe comporte d'une part, en partie basse, une pièce annulaire s'adaptant sur l'orifice de lessivage et munie d'un joint périphérique formant le siège de clapet et d'autre part une pièce tubulaire fixée sur ledit siège de clapet et formant un organe de guidage de l'équipage mobile.

L'invention a également pour objet un procédé de vinification comprenant notamment une opération de fermentation de la vendange introduite dans une cuve de fermentation avec formation de gaz carbonique, d'une phase liquide constituée par le jus, et d'une phase solide formant un chapeau de marc qui flotte sur le jus, et périodiquement une opération de remontée du jus dans le cuveau par augmentation de la pression du gaz carbonique dans la partie supérieure de la cuve de fermentation, une opération d'arrosage du chapeau de marc par le jus contenu dans ledit cuveau, et des opérations de levurage ou de sucrage, lesdites opérations étant effectuées en permanence sous atmosphère contrôlée de gaz inerte comme par exemple du gaz carabonique, caractérisé en ce que les opérations de levurage ou de sucrage sont réalisées directement dans le cuveau.

L'invention sera mieux comprise à l'aide de la description qui va suivre, donnée uniquement à titre d'exemple et faite en se référant aux dessins annexés, sur lesquels :
- La figure 1 est une vue schématique en coupe d'un cuve de vinification conforme à l'invention ;
- la figure 2 est une vue en coupe à plus grande échelle du clapet automatique de la figure 1 ;
- les figures 3 à 6 sont des vues schématiques montrant les différentes étapes de fonctionnement du clapet automatique ;
- la figure 7 est une vue en coupe d'une variante du clapet automatique ;
- la figure 8 est une vue schématique d'une variante de la cuve de vinification ;
- la figure 9 est une vue schématique d'un cuveau modulaire adaptable sur une cuve de fermentation existante ;
- la figure 10 est une vue schématique montrant la liaison entre un cuveau modulaire et une cuve de fermentation existante.

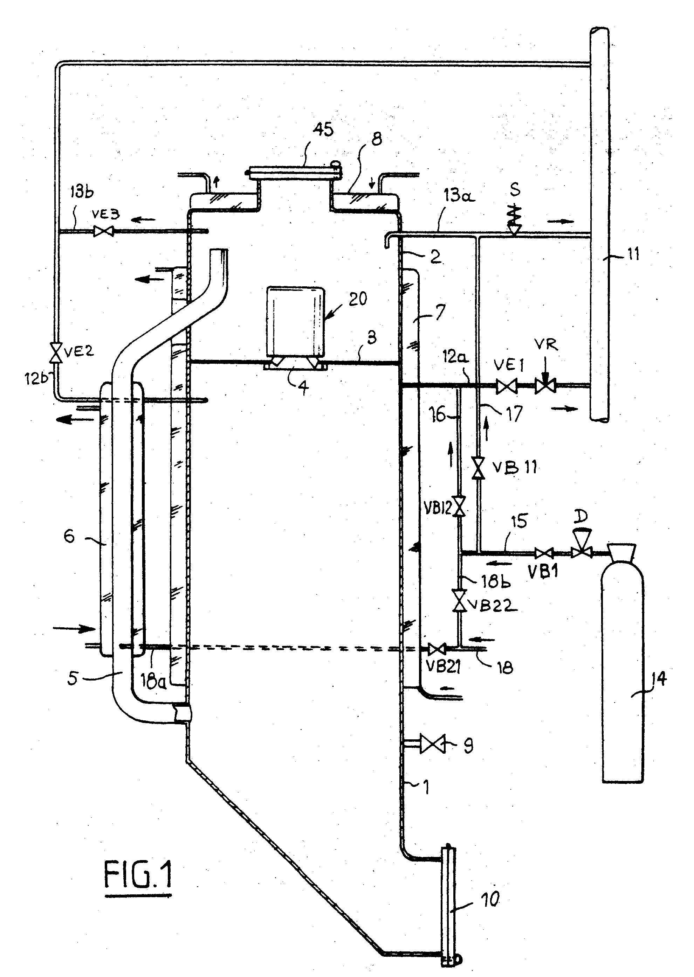

La cuve de vinification représentée à la figure 1 comporte une cuve inférieure 1 dans laquelle s'opère la fermentation alcoolique et un cuveau 2 dans lequel le jus sera transféré périodiquement, comme on le verra ultérieurement.

La cuve de fermentation 1 et le cuveau 2 sont séparés par une cloison horizontale 3 comportant une ouverture 4 sur laquelle est placé un clapet automatique 20.

D'autre part, la cuve de fermentation 1 est reliée au cuveau 2 par au moins une colonne de remontage 5 munie d'un échangeur de chaleur 6 et par laquelle transite le jus.

Afin de maintenir le jus à la température dans la plage requise pour assurer le démarrage de la fermentation, et également au cours de la fermentation proprement dite, un échangeur de chaleur 7 peut être disposé sur la cuve de fermentation 1 et sur le cuveau 2. Sur le couvercle du cuveau 2, on peut également disposer un échangeur refroidisseur 8 afin de condenser les arômes et l'alcool éthylique. Les échangeurs représentés à titre d'exemple sont du type à double paroi, le fluide d'échange peut être de l'eau circulant dans cette double paroi.

La cuve de fermentation 1 comporte également les dispositifs habituels pour pouvoir assurer sa vidange lorsque la fermentation est terminée, comme par exemple une vanne 9 d'extraction du jus ou "vanne de tirage au clair", une trappe 10 et des moyens d'extraction du marc non représentés.

La partie supérieure de la cuve de fermentation 1 est reliée à une colonne 11 d'évacuation de gaz carbonique par une première canalisation 12a munie d'une vanne VE1 et d'un robinet pointeau VR qui peut aussi être constitué par un détendeur réglable du type déverse, et par une seconde canalisation 12b munie d'une vanne VE2.

Il en est de même pour la partie supérieure du cuveau 2 qui est reliée à la colonne 11 par une première canalisation 13a munie d'un détendeur S du type déverse dont la pression de fonctionnement est réglée à une pression légèrement supérieure à la pression atmosphérique, par exemple de l'ordre de quelques millibars, et par une seconde canalisation 13b munie d'une vanne VE3.

La colonne 11 évacue le gaz carbonique à l'extérieur du chai, ce qui assure une plus grande sécurité au personnel que les cuves traditionnelles ou bien encore que les cuves comportant un cuveau ventilé par l'air atmosphérique.

Une bouteille 14 de gaz inerte, par exemple du gaz carbonique, est raccordée, par une conduite générale d'alimentation 15 comportant une vanne VB1 et un détendeur D, d'une part à la canalisation 12a débouchant à la partie supérieure de la cuve de fermentation 1 par une canalisation 16 munie d'une vanne VB12 et d'autre part à la canalisation 13a débouchant à la partie supérieure du cuveau 2 par une canalisation 17 munie d'une vanne VB11.

Enfin, la colonne de remontage 5 est reliée à une alimentation 18 en air de qualité alimentaire par une canalisation 18a munie d'une vanne VB21, cette alimentation 18 communiquant également avec la canalisation 16 par une canalisation 18b munie d'une vanne VB22.

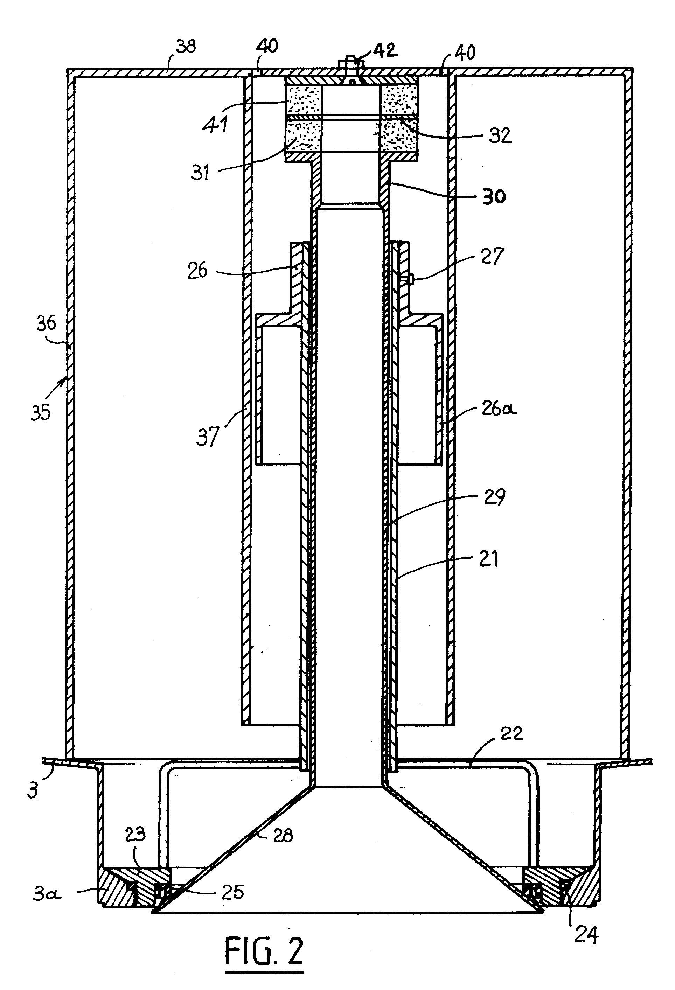

Le clapet automatique 20 représenté à plus grande échelle à la figure 2 est constitué par un ensemble fixe formé par une pièce tubulaire 21 reliée à sa partie inférieure par plusieurs pattes 22 à un anneau 23 qui s'adapte sur un épaulement 3a prévu dans l'ouverture 4 de la cloison 3 et fixée sur ledit anneau par un assemblage à vis ou à baïonnette. Un joint d'étanchéité 24 est comprimé entre l'anneau 23 et l'épaulement 3a.

L'anneau 23 comporte également un joint périphérique 25, par exemple du type à lèvre, qui constitue un siège de clapet.

Sur la pièce tubulaire 21, est fixée une butée 26 dont la position est réglable en altitude par l'intermédiaire de vis 27 et qui comporte un guidage 26a.

Le clapet 20 comporte également un équipage mobile pouvant se déplacer verticalement et qui est formé en partie basse par une partie tronconique 28 coopérant avec le siège de clapet formé par le joint périphérique 25 de façon à obturer l'ouverture 4. La partie tronconique 28 est surmontée d'un tube 29 coulissant à l'intérieur de la pièce tubulaire fixe 21, et qui comporte à sa partie supérieure un support 30 sur lequel est fixé un aimant permanent 31 en forme de tore. Un joint 32 torique, ou en forme de disque, est fixé directement sur l'aimant 31.

Enfin, le clapet 20 comporte un flotteur 35 constitué, dans ce premier mode de réalisation, de deux enveloppes cylindriques concentriques, respectivement 36 et 37, ouvertes en partie basse et obturées en partie haute par un fond plat 38. Le flotteur 35 est centré par le guidage 26a de la butée 26 qui coopère avec l'enveloppe interne 37.

La partie centrale du fond 38 est munie d'une ouverture annulaire pouvant être réalisée, par exemple, par un ensemble de trous 40. D'autre part, le fond 38 comporte sur sa face interne et dans le prolongement du tube 29, un aimant torique permanent 41 maintenu par un organe de fixation 42 et coopérant par sa force d'attraction avec l'aimant permanent 31 disposé sur ledit tube 29.

Au moment de la mise en service de la cuve de vinification, le clapet 20 est retiré de l'ouverture 4 et la vendange est déversée dans la cuve de fermentation 1 par l'intermédiaire d'un tube, non représenté, introduit par le trou d'homme 45 et l'ouverture 4. Ensuite le clapet automatique 20 est mis en place dans l'ouverture 4 et le trou d'homme 45 du cuveau est fermé.

A ce stade, l'ensemble de la cuve de vinification contient de l'air atmosphérique. Si le vinificateur le juge nécessaire, il procède à un balayage par le gaz carbonique provenant de la bouteille 14 et admis simultanément à la même pression dans la cuve de fermentation 1 et dans le cuveau 2 en ouvrant les vannes VB11, VB12, VE2 et VE3 de façon à chasser l'air et l'oxygène. Les vannes VB11, VB12, VE2 et VE3 sont ensuite refermées. Aucune phase liquide n'étant présente dans le cuveau 2, les phases gaz dans la cuve de fermentation 1 et dans le cuveau 2 étant à la même pression statique, le flotteur 35 de par son propre poids est en partie basse, et la force d'attraction des aimants permanents 31 et 41 étant supérieure au poids de l'équipage mobile 28 et 29, celui-ci est donc en position haute, et la partie tronconique 28 est en appui sur le joint 25, obturant ainsi l'ouverture 4.

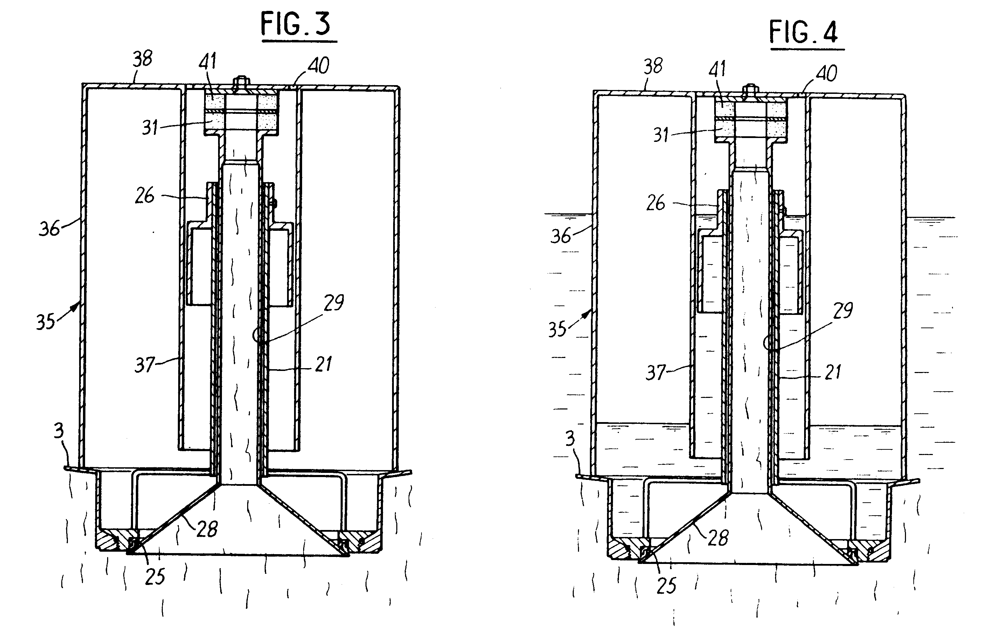

Les conditions d'ensemencement en levure et de température de la vendange étant satisfaisantes, la fermentation éthylique dans la cuve de fermentation 1 démarre et le gaz carbonique ainsi formé pénètre dans le tube 29 du clapet 20 (figure 3). La formation de gaz carbonique entraîne une augmentation de la pression de ce gaz au-dessus de la vendange dans la cuve de fermentation 1, et le jus commence à monter vers le cuveau 2 par la colonne de remontage 5.

La fermentation et la production de gaz carbonique se poursuivent, le jus continue à monter dans le cuveau 2 et le niveau dans ce dernier s'élève (figure 4). Le flotteur 35 tend à se soulever, mais il reste en position basse, et donc l'ouverture 4 est fermée par la partie tronconique 28 de l'équipage mobile, tant que la force d'attraction des deux aimants 31 et 41 est supérieure à la flottabilité du flotteur 35, celle-ci étant définie comme étant la différence entre la poussée d'Archimède sur le volume immergé du flotteur 35 et le propre poids dudit flotteur. Cette poussée d'Archimède ou résultante des efforts de pression hydrostatique est évidemment une fonction directe de la hauteur du niveau du jus dans le cuveau 2.

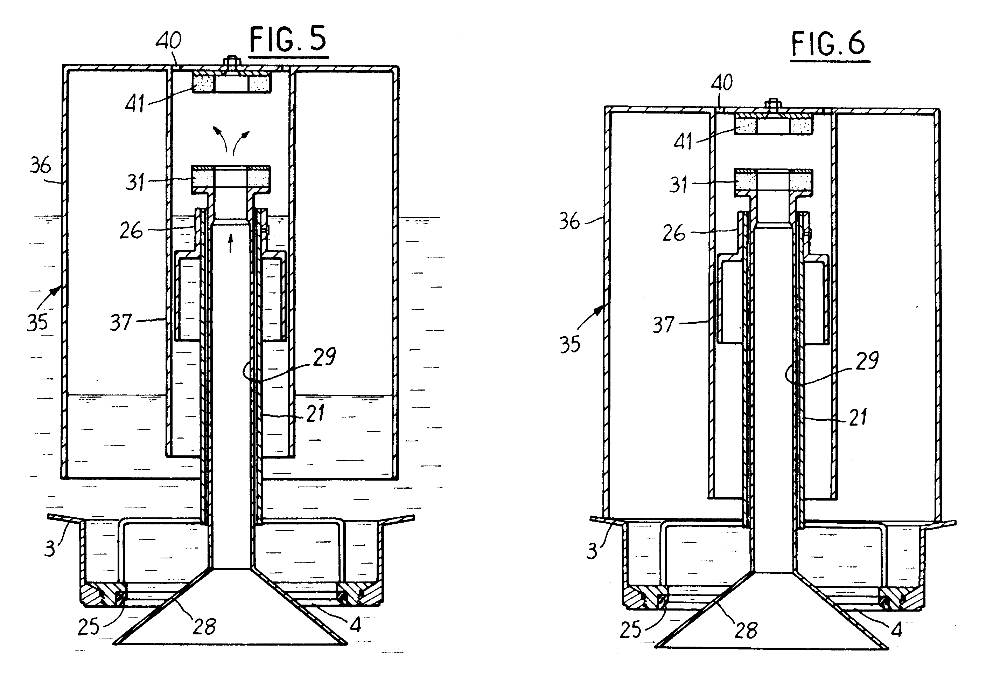

Comme représenté sur la figure 5, le niveau de jus dans le niveau 2 continuant à monter, la flottabilité du flotteur 35 devient supérieure à la force d'attraction des aimants 31 et 41, et le flotteur 35 se détache du tube 29 de l'équipage mobile, libérant ainsi l'ouverture supérieure dudit tube. Du fait de la pression du gaz carbonique plus élevée dans la cuve de fermentation 1, le gaz carbonique transite donc par ce tube 29 et les pressions statiques des phases gazeuses de la cuve de fermentation 1 et du cuveau 2 s'équilibrent.

Dès lors que les aimants 31 et 41 sont décollés, l'équipage mobile 28, 29 est soumis au système de force, suivant une verticale ascendante et suivant une verticale descendante. Les forces suivant la verticale ascendante sont produites par l'effet de fond de la pression du gaz carbonique dans la cuve de fermentation 1 sur la section de fermeture de l'équipage mobile. Les forces suivant la verticale descendante sont produites par le poids du clapet, la charge hydrostatique correspondant à la hauteur de jus dans le cuveau 2, l'effet de fond de la pression du gaz carbonique du cuveau sur la section du tube 29 de l'équipage mobile.

Le gaz carbonique s'échappe par les orifices 40 et lorsque la pression de gaz carbonique dans la cuve de fermentation 1 descend en-dessous de la valeur correspondant à l'équilibre stricte en position de fermeture de l'équipage mobile 28, 29, ce dernier descend et libère ainsi l'ouverture 4. L'extrémité du tube 29 vient en appui sur la butée 26.

Le jus descend alors vers la cuve de fermentation 1 par un écoulement en forme de nappe, et vient arroser le chapeau de marc surnageant le moût dans la cuve de fermentation.

Le jus continuant à s'écouler, le cuveau 2 se vide, et le flotteur 35 n'étant plus soumis à la poussée d'Archimède tombe en position basse, par son propre poids (figure 6). Dans cette position, les deux aimants 31, 41 sont à une distance telle que la force d'attraction est supérieure au poids de l'équipage mobile 28, 29, ce dernier a donc un mouvement ascendant et vient obturer à nouveau l'ouverture 4.

La butée 26 sur le tube fixe 21 permet de régler la course de l'équipage mobile, afin que ce dernier soit compatible avec la distance correspondant à la force d'attraction des deux aimants 31, 41.

A la fin de cette étape, l'équipage mobile 28, 29 est donc réenclenché en position "fermeture" et les opérations successives de remplissage et de vidange du cuveau 2 peuvent se dérouler suivant un schéma identique à ce qui vient d'être décrit, et de manière automatique et cyclique durant toute la phase de fermentation de la vendange.

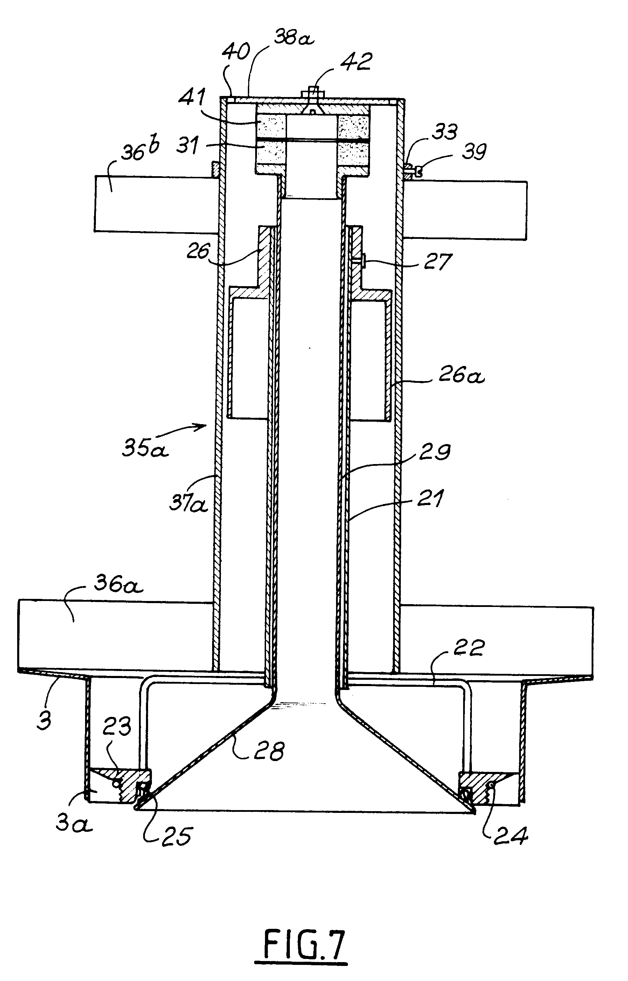

Selon une variante illustrée à la figure 7, le clapet automatique 20 comporte, comme dans la variante précédente, un ensemble fixe 21, 22 et 23 adapté sur l'orifice de lessivage 4 et formant le siège de clapet 25, un équipage mobile 28, 29 se déplaçant verticalement et coopérant avec ledit siège de clapet, et des aimants permanents de maintien de l'équipage mobile sur le siège de clapet 25.

Mais, dans ce mode de réalisation, le flotteur 35a est constitué d'une enveloppe cylindrique 37a qui coopère avec le guidage 26a de la butée 26. Cette enveloppe cylindrique 37a est ouverte en partie basse et obturée en partie haute par un fond plat 38a muni dans sa partie centrale d'une ouverture annulaire 40.

Le flotteur 35a comporte également deux éléments de flottabilité, respectivement 36a et 36b disposés sur l'enveloppe cylindrique 37a. L'élément de flottabilité 36a est fixé à la partie basse de l'enveloppe cylindrique 37a et a pour but de compenser le poids de l'ensemble du flotteur, et l'élément de flottabilité 36b assure de manière réglable l'ouverture de l'équipage mobile 28-29 en fonction du niveau de jus dans le cuveau.

A cet effet, la position de l'élément de flottabilité 36b est réglable en altitude sur l'enveloppe cylindrique 37a au moyen d'une collerette 33 solidaire dudit élément et d'une vis 39.

L'élément de flottabilité 36b peut également être indépendant de la collerette 39 et dans ce cas il coulisse sur l'enveloppe cylindrique 37a en suivant le niveau du jus dans le cuveau, entre une position basse limitée par l'élément de flottabilité 36a et une position haute limitée par la collerette 33 dont la position en altitude est réglable.

La position de l'élément de flottabilité 36b muni de la collerette 33 ou la collerette 33 seule est déterminée en fonction de la hauteur de jus dans le cuveau pour laquelle on désire que la flottabilité dudit élément 36b devienne supérieure à la force d'attraction des aimants 31 et 41 pour assurer l'ouverture de l'équipage mobile 28-29.

Ce dispositif selon l'une ou l'autre variante est donc d'une conception et d'une réalisation particulièrement simples, et d'un fonctionnement sûr et automatique, tout en ne faisant pas appel à d'autre source que l'anhydride carbonique. De plus, il ne nécessite aucun amorçage préalable en eau ou en jus.

Son application permet également de conférer à la cuve de vinification d'autres avantages quant à son adaptation au procédé mis en oeuvre par le vinificateur.

En début de fermentation, le vinificateur peut avoir avantage à démarrer les mouvements de jus alors que la production d'anhydride carbonique résultant de la conversion du sucre en alcool éthylique est encore faible. Pour cela il procède à une circulation assistée en introduisant par la vanne VB12 du gaz carbonique, provenant de la bouteille 14, dans le ciel de la cuve de fermentation 1, la vanne VE2 étant fermée.

De même il est assez fréquent dans les procédés de vinification traditionnels en rouge d'effectuer en début de fermentation une aération du moût afin d'activer les levures, pour cela le vinificateur peut également introduire par les vannes VB12 et VB22 de l'air de qualité alimentaire, en faisant ainsi une oxygénation parfaitement contrôlée, tout en continuant les opérations de lessivage, et sans gêner le fonctionnement automatique du clapet, l'oxygénation peut ainsi se faire dans la colonne de remontage 5 par la vanne VB21.

En cours de fermentation, et toujours afin de respecter au mieux le procédé traditionnel qui lui est propre, le vinificateur peut aisément régler la périodicité des phases de remontage du jus et de lessivage du chapeau de marc. Pour cela il suffit de régler au moyen du robinet pointeau VR, un débit de fuite de gaz carbonique prélevé dans le ciel de gaz de la cuve de fermentation 1 afin de modifier ainsi la fréquence de fonctionnement du clapet automatique 20.

En fin de fermentation, alors que la production de gaz carbonique décroît, le vinificateur peut juger nécessaire de poursuivre la macération du moût afin d'extraire du marc la totalité des arômes et des substances colorantes. A cet effet il peut également utiliser un mode de circulation assistée en pratiquant par l'ouverture de la vanne VB12, une injection de gaz carbonique se substituant aussi en tout ou partie à la production de gaz carbonique résultant de la fermentation éthylique.

La canalisation 13a munie du détendeur S débouchant à la partie supérieure du cuveau 2 permet d'évacuer le gaz carbonique résultant de la fermentation et qui comme indiqué précédemment, transite périodiquement de la cuve de fermentation 1 vers le cuveau 2.

Cette disposition permet ainsi de maintenir en permanence une couverture de gaz carbonique au-dessus des produits de la vendange et d'éviter toute oxygénation incontrôlée de ceux-ci.

L'échangeur refroidisseur 8 disposé sur la face supérieure du cuveau 2 permet d'avoir une paroi froide assurant la condensation de l'alcool et d'autres arômes volatils dont une partie serait entraînée par le gaz carbonique et évacuée vers le collecteur de décharge 11. De plus la tuyauterie 13a de décharge du gaz carbonique, à son débouché dans le cuveau 2, peut être équipée d'une boîte à chicanes, non représentée, afin d'éviter tout entraînement de condensats.

Le mode de réalisation qui vient d'être décrit est relatif à une cuve constituée par un assemblage d'une cuve de fermentation et d'un cuveau, chacun étant d'un volume défini et fixe. Or, très souvent, en fin de période de vendange, le vinificateur a une quantité de baies correspondant à un cépage, qui est insuffisante pour remplir la cuve de fermentation jusqu'à son niveau correspondant à environ au 3/4 ou au 4/5ème du volume total de celle-ci. Dans ces conditions, le volume au-dessus de la vendange dans la cuve de fermentation, et la hauteur de relevage peuvent être trop importantes pour assurer le lessivage à la fréquence souhaitée, compte-tenu de la quantité de gaz carbonique endogène résultant de la fermentation du jus. Dans ces conditions, il est alors nécessaire de procéder à une circulation assistée par du gaz carbonique exogène, et ceci pendant toutes les phases d'élaboration en vin de cette cuvée réduite.

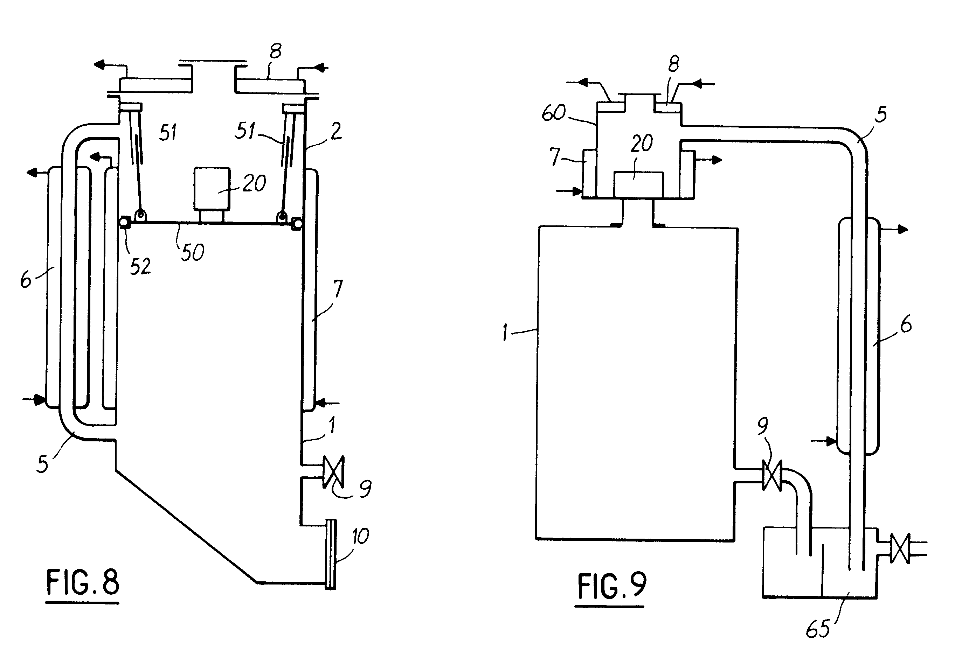

Afin d'éviter cette astreinte, la cuve de vinification représentée à la figure 8 comporte un diaphragme mobile 50 qui délimite un volume inférieur constituant la cuve de fermentation 1 et un volume supérieur constituant le cuveau 2. Le diaphragme 50 constitue à la fois le plafond de la cuve de fermentation 1 et le plancher du cuveau 2. Le réglage en altitude du diaphragme 50 est réalisé, par exemple, au moyen de tiges filetées ou des crémaillères 51, ce qui permet ainsi d'adapter le volume de la cuve de fermentation 1 au volume de la vendange. A la périphérie du diaphragme 50 est prévu un système d'étanchéité qui peut avantageusement être constitué par un joint gonflable 52 par exemple à l'air comprimé ou au gaz carbonique, le joint 52 étant dégonflé lors des réglages, et d'une manière générale, lors des mouvements du diaphragme 50, est mis en pression pour assurer l'étanchéité sur la paroi interne de la cuve.

Dans la partie centrale du diaphragme 50 est installé le clapet automatique de lessivage 20 identique à celui de l'une des variantes précédentes.

Par ailleurs, les aménagements de la cuve, c'est-à-dire les échangeurs de réglage de la température du jus, le refroidisseur de vapeur sur le cuveau, les circuits connexes de gaz carbonique sont évidemment identiques à ceux de la variante précédente.

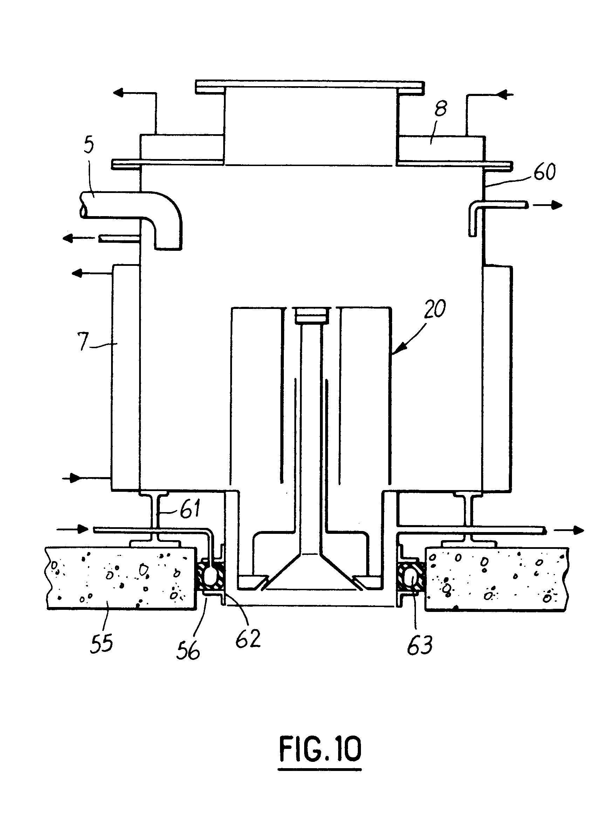

Une autre variante réside dans l'application de l'invention à une cuve traditionnelle existante, qu'elle soit construite en béton ou en acier inoxydable ou en tout autre matériau. Dans tous les cas, la cuve comporte un couvercle 55 équipé d'un trou d'homme 56 (figure 10) pour le chargement de la vendange, le dégagement de gaz carbonique, la visite et le nettoyage ultérieurement à la vinification, Dans ce cas, le cuveau 60 comportant le clapet automatique de lessivage 20 est muni d'une collerette support 61 qui est fixée sur le couvercle 55 autour du trou d'homme 56. La partie inférieure du cuveau 60 est prolongée par un tube 62 de diamètre inférieure au trou d'homme 56, et pénétrant légèrement dans ce dernier. L'étancriéité est avantageusement réalisée par un joint gonflable 63.

Comme dans les variantes précédentes, les aménagements de la cuve, c'est-à-dire les échangeurs de chaleur de la température du jus, le refroidisseur de vapeur sur le cuveau, les circuits connexes de gaz carbonique sont évidemment identiques.

La colonne 5 de remontée du jus est implantée sur la cuve soit directement sur la vanne de tirage au clair 9, soit sur une cuve de décantation 65 disposée immédiatement à l'aval de celle-ci, comme représenté sur la figure 9.

Quelle que soit la solution de cuve et cuveau envisagée, tous les matériaux adoptés pour la construction des éléments de la cuve de vinification, c'est-à-dire de la cuve de fermentation, du cuveau, du clapet, et des circuits connexes... sont évidemment compatibles avec les exigences de l'industrie Agro-Alimentaire. Par ailleurs ces matériaux sont en général amagnétiques, condition qui est plus particulièrement requise pour les pièces constitutives du clapet automatique 20.

L'installation se prête également à certains traitements spécifiques de conditionnement du jus, comme par exemple le levurage, et en facilite la mise en oeuvre. En effet, les levures indigènes présentes dans le jus peuvent être en quantité trop faible, ou bien encore d'une activité insuffisante pour assurer correctement la fermentation. Ceci peut par exemple se produire lorsque des pluies importantes ont précédé la récolte de la vendange, Dans ce cas, il convient d'ensemencer le jus, soit en début, soit en cours de fermentation, avec des levures de culture. La pratique recommandée consiste tout d'abord à réhydrater ces levures de culture afin de les réactiver, d'ajouter ensuite du jus clair et procéder enfin à l'introduction de cette préparation, ou levain, dans le volume total de jus.

Le cuveau selon la présente invention équipé du clapet automatique permet de réaliser aisément cette opération sans avoir recours à un équipement particulier pour préparer le levain.

Dans le cas d'un levurage avant démarrage de la fermentation, le couvercle ou le trou d'homme du cuveau est ouvert, et le clapet est en position de fermeture. Les levures sèches et l'eau de réhydratation sont placées dans le cuveau. Après réactivation des levures, le vinificateur effectue la remontée de jus clair par introduction de gaz carbonique dans la cuve jusqu'à un niveau inférieur à celui correspondant au décrochage flotteur équipage mobile au moyen de la vanne VB12, la vanne VE1 étant fermée. Quand la levure est dans ses conditions optimales d'activité, le viticulteur ferme le couvercle ou le trou d'homme du cuveau, et il effectue une circulation assistée par introduction de gaz carbonique dans la cuve au moyen de la vanne VB12, afin de mélanger le levain dans le volume total de jus.

Dans le cas d'un levurage en cours de fermentation, le clapet étant en position d'ouverture pendant une étape de lessivage, le vinificateur interrompt le fonctionnement automatique dudit clapet par décharge de gaz carbonique de la cuve au moyen de l'ouverture de la vanne VE2. Le cuveau se vide entièrement et le clapet se réenclenche en position de fermeture. Le vinificateur effectue l'hydratation des levures par la remontée de jus clair en fermant la vanne VE2 qui est ensuite remise en position ouverte après obtention du niveau. Après activation du levain, il remet le clapet en service automatique par fermeture de la vanne VE2.

Une procédure semblable peut être appliquée pour procéder à une addition de sucre dans le jus, dans les vignobles où cette pratique est autorisée.

Il apparaît ainsi à la description qui précède, que la présente invention est particulièrement bien adaptée à la vinification en rouge, pour laquelle elle permet d'obtenir une très bonne macération du marc dans le jus. Elle ne s'applique pas exclusivement à ce mode de vinification, et permet également d'améliorer les procédés d'élaboration du vin blanc.

Cependant, pour obtenir des vins de qualité, en particulier pour ceux dits "blanc de blanc", il est préférable de réaliser, au préalable, une opération de macération préfermentaire, celle-ci consistant à laisser les baies en présence du jus pendant environ 48 Heures, afin d'extraire des pellicules, les pectines et arômes. Cette opération est conduite à une température de 16°C à 18°C, dont en-dessous de celle permettant de démarrer la fermentation éthylique. Pendant la prémacération fermentaire, ainsi que pendant la fermentation elle-même, il est extrêmement important pour cette vinification en blanc de maintenir des conditions d'anaérobie et d'aseptie, ce type de vin étant encore plus sensible que le vin rouge à la contamination et à l'oxygénation. Là encore une cuve de vinification équipée d'un cuveau et d'un clapet automatique conforme à la présente invention permet de respecter ces conditions.

En effet, après égrappage et foulage éventuels, la vendange est placée dans la cuve de fermentation, mais dans laquelle, au cours de cette première étape de macération, la fermentation n'a pas encore lieu. Il est alors procédé à une circulation assistée par injection de gaz carbonique dans la cuve.

A la fin de cette macération, la vendange est extraite de la cuve de fermentation, et le jus, après séparation du marc ("saignée"), est replacé à nouveau dans ladite cuve de fermentation. La fermentation ayant démarré, la circulation de jus entre la cuve de fermentation et le cuveau est réalisée automatiquement par le gaz carbonique résultant de la fermentation, comme cela a été décrit précédemment.

La circulation, assistée pendant la macération, ou naturelle pendant la fermentation, est particulièrement intéressante car elle permet également dans ce mode de vinification d'homogénéiser la température et la composition du jus et d'améliorer la qualité du vin produit, et ce en maintenant toujours un ciel de gaz carbonique au-dessus du jus.

L'application a une vinification "en rosé" est également possible, elle est d'ailleurs évidente quand on sait qu'un vin rosé est obtenu, soit par vinification en blanc à partir de raisins rouges, soit par une vinification en rouge dans laquelle il est pratiqué une "saignée", afin d'interrompre la macération, la fermentation étant poursuivie sur le jus seul.

Ainsi, une installation de vinification conforme à la présente invention, satisfait les divers critères oènologiques permettant d'obtenir, de manière naturelle et conforme à la tradition, le meilleur vin possible à partir de la vendange.

D'autre part, cette installation permet d'avoir un réglage de la température du jus, pour le démarrage de la fermentation, et au cours de la fermentation, une homogénéisation du jus, pour obtenir un champ de température le plus isotherme possible, et également pour la répartition massique des réactions de fermentation, et de favoriser, pour la vinification en rouge, la macération du marc et du moût.

Enfin, elle permet d'avoir une couverture d'anhydride carbonique en permanence sur la vendange afin d'obtenir une vinification dans un milieu anaérobique et aseptique, et une bonne conversion des arômes et de l'alcool, tout en ayant une souplesse d'utilisation afin de s'adapter au procédé traditionnel propre au vignoble, et une exploitation et une maintenance simples et peu coûteuses.

L'invention a été décrite en se basant sur une fermentation obtenue à partir des baies de raisin, car cette forme de fermentation est la plus couramment utilisée.

Mais d'une manière générale, l'invention s'applique à toutes formes de fermentation alcoolique, notamment de fruits, les phénomènes de base de fermentation étant bien évidemment semblables.

## Revendications

1. Cuve de vinification comprenant une cuve inférieure (1) de fermentation et un cuveau supérieur (2, 60) communiquant entre eux par un orifice de lessivage (4, 56) obturable et reliés par au moins une colonne de remontage (5) du jus de la cuve de fermentation (1) vers le cuveau (2, 60), caractérisée en ce qu'elle comporte au moins un clapet (20) mettant en communication de manière automatique et cyclique la cuve de fermentation (1) et le cuveau (2, 60) et comprenant :
- un ensemble fixe (21, 22, 23) adapté sur l'orifice de lessivage (4, 56) et formant un siège de clapet (25),
- un équipage mobile (28, 29) se déplaçant verticalement et coopérant avec ledit siège de clapet (25),
- un flotteur mobile (35-35a) pouvant également se déplacer verticalement,
- des moyens d'étanchéité (32) entre l'équipage mobile (28-29) et le flotteur mobile (35-35a),
- et des moyens (31, 41) de maintien de l'équipage mobile (28, 29) sur le siège de clapet (25) en fonction de la hauteur du niveau du jus dans le cuveau (2, 60) détecté par ledit flotteur (35-35a).

2. Cuve de vinification selon la revendications 1, caractérisée en ce que l'ensemble fixe comporte d'une part, en partie basse, une pièce annulaire (23) s'adaptant sur l'orifice de lessivage (4) et munie d'un joint périphérique (25) formant le siège de clapet et d'autre part une pièce tubulaire (21) fixée sur ledit siège de clapet et formant un organe de guidage de l'équipage mobile (28, 29).

3. Cuve de vinification selon les revendications 1 et 2, caractérisée en ce que la pièce tubulaire (21) de l'ensemble fixe est munie d'une butée (26) réglable en hauteur sur ladite pièce tubulaire (21) et servant de moyen de butée en position basse de l'équipage mobile (28, 29) et de moyens (26a) de guidage du flotteur (35-35a).

4. Cuve de vinification selon les revendications 1 et 2, caractérisée en ce que l'équipage mobile comporte, en partie basse, une partie tronconique (28) coopérant avec le joint périphérique (25) formant le siège de clapet et se prolongeant par un tube (29) coulissant à l'intérieur de la pièce tubulaire (21) de l'ensemble fixe.

5. Cuve de vinification selon la revendication 1, caractérisée en ce que le flotteur (35) est constitué de deux enveloppes cylindriques (36, 37) concentriques ouvertes en partie basse et obturées en partie haute par un fond plat (38) muni dans sa partie centrale d'une ouverture annulaire (40).

6. Cuve de vinification selon la revendication 1, caractérisée en ce que la flotteur (35a) est constitué d'une enveloppe cylindrique (37a) ouverte en partie basse et obturée en partie haute par un fond plat (38a) muni dans sa partie centrale d'une ouverture annulaire (40) et de deux éléments de flottabilité indépendants (36a, 36b) disposés sur l'enveloppe cylindrique (37a), l'un (36a) desdits éléments de flottabilité compensant le poids du flotteur (35a) et l'autre (36b) assurant de manière réglable l'ouverture de l'équipage mobile (28, 29) en fonction du niveau du jus dans le cuveau (2, 60).

7. Cuve de vinification selon la revendication 6, caractérisée en ce que l'élément de flottabilité (36a) compensant le poids du flotteur (35a) est fixé à la partie basse de l'enveloppe cylindrique (37a).

8. Cuve de vinifcation selon l'une des revendications 1 à 7, caractérisée en ce que les moyens d'étanchéité (32) sont disposés à la partie supérieure du tube (29) de l'équipage mobile (28, 29) et obturent l'ouverture annulaire (40) du flotteur mobile (35, 35a) dans la position de fermeture de l'orifice de lessivage (4) par ledit équipage mobile (28, 29).

9. Cuve de vinification selon l'une des revendications 1 à 7, caractérisée en ce que les moyens de maintien de l'équipage mobile (28, 29) sur le siège de clapet (25) sont constitués par un premier aimant permanent (41) solidaire du flotteur (35-35a) et par un second aimant permanent (31) solidaire dudit équipage mobile (28, 29).

10. Cuve de vinification selon l'une des revendications 1 à 9, caractérisée en ce que les moyens d'étanchéité sont constitués par un joint (32) interposé entre les deux aimants (31, 41).

11. Cuve de vinification selon l'une des revendications 1 à 10, caractérisée en ce que le clapet automatique (20) est monté sur un diaphragme mobile (50) réglable en altitude qui délimite un volume inférieur constituant la cuve de fermentation (1) et un volume supérieur constituant le cuveau (2).

12. Cuve de vinification selon l'une des revendications 1 à 10, caractérisée en ce que le clapet automatique (20) est monté dans un cuveau (60) indépendant et adaptable sur une cuve de fermentation (1) existante.

13. Procédé de vinification utilisant une cuve de vinification selon les revendications 1 à 12 comprenant notamment une opération de fermentation de la vendange introduite dans une cuve de fermentation (1) avec formation de gaz carbonique, d'une phase liquide constituée par le jus, et d'une phase solide formant un chapeau de marc qui flotte sur le jus, et périodiquement une opération de remontée du jus dans le cuveau (2, 60) par augmentation de la pression du gaz carbonique dans la partie supérieure de la cuve de fermentation (1), une opération d'arrosage du chapeau de marc par le jus contenu dans ledit cuveau (2, 60), et des opérations de levurage ou de sucrage, lesdites opérations étant effectuées en permanence sous atmosphère contrôlée de gaz inerte comme par exemple du gaz carbonique, caractérisé en ce que les opérations de levurage ou de sucrage sont réalisées directement dans le cuveau (2, 60).

## Claims

1. Vinification vat composed of a lower fermentation vat (1) and a higher head vat (2,60) communicating to each other through a blockable washing hole (4,56) and linked to at least a rising up column (5) of the juice from the fermentation vat (1) towards the head vat (2,60) characterised by the fact that it has at least a valve (20) allowing an automatic and cyclic communication between the fermentation vat (1) and the head vat (2,60), and composed of:
- a fixed system (21,22,23) adapted on the washing hole (4,56) and forming a valve seat (25)
- a mobile system (28,29) moving vertically and interacting with the latter valve seat (25)
- a mobile float (35,35a) also able to move vertically
- hermetical means (32) between the mobile system (28,29) and the mobile float (35,35a)
- holding means (31,41) of the mobile system (28,29) on the valve seat (25) as a function of the height of the juice level in the head vat (2,60) detected by the float (35,35a).

2. Vinification vat according to claiming 1 characterised by the fact that the fixed system is composed of: on the one hand a lower part, an annular piece (23) adapted on the washing hole (4) and fitted with a peripherical joint (25) forming the value seat, on the other hand a tubular piece (21) fixed on the valve seat, giving rise to the leading part of the mobile system (28,29).

3. Vinification vat according to claimings 1 and 2 characterised by the fact that the tubular piece (21) of the fixed system is fitted with a stop (26) which height is adjustable on the tubular piece (21) and used firstly as a stopping mean when the mobile system (28,29) is at the lower position and secondly as a leading mean (26a) of the float (35,35a).

4. Vinification vat according to claimings 1 and 2 characterised by the fact that the mobile system is composed of a lower part, a flattened cone like part (28) working with the peripherical joint (25) forming the valve seat and finishes as a tube (29) able to slide inside the tubular piece (21) of the fixed system.

5. Vinification vat according to claiming 1 characterised by the fact that the float (35) is constituted of a concentric cylindric cover (36,37) which lower part is open and higher part is closed by a flat bottom piece (38) which is fitted with an annular aperture (40) in its central part.

6. Vinification vat according to claiming 1 characterised by the fact that the float (35a) is constituted of a cylindric cover (37a) which lower part is open and higher part is closed by a flat bottom piece (38a) which is fitted with an annular aperture (40) in its central part and two independant floating elements (36a,36b) disposed on the cylindric cover (37a), one of those floating element (36a) balances the float (35a) weight and the other one (36b) ensures, in an adjustable way, the opening of the mobile system (28,29) as a function of the juice level in the head vat (2,60).

7. Vinification vat according to claiming 6 characterised by the fact that the floating element (36a) which balances the float weight (35a) is fixed to the lower part of the cylindric cover (37a).

8. Vinification vat according to claimings 1 to 7 characterised by the fact that the hermetical means (32) are placed at the higher part of the tube (29) of the mobile system (28,29) and block the annular aperture (40) of the mobile float (35,35a) at the closed position of the washing hole (4) by the mobile system (28,29).

9. Vinification vat according to claimings 1 to 7 characterised by the fact that the holding means of the mobile system (28,29) on the valve seat (25) are constituted by a permanent magnet (41) attached on the float (35,35a) and by another permanent magnet (31) attached on the mobile system (28,29).

10. Vinification vat according to claimings 1 to 9 characterised by the fact that the hermetical means are constituted by a seal (32) placed between the two magnets (31,41).

11. Vinification vat according to claimings 1 to 10 characterised by the fact that the automatic valve (20) is mounted on a mobile diaphragm (50) adjustable in height which determine a lower volume constituting the fermentation vat (1) and a higher volume constituting the head vat (2).

12. Vinification vat according to claimings 1 to 10 characterised by the fact that the automatic valve (20) is mounted in an independant head vat (60) and adaptable on an existing fermentation vat (1).

13. Vinification process using a vinification vat according to claimings 1 to 12 composed in particular of a fermentation operation of grapes gathered, introduced in a fermentation vat (1) with formation of a carbon dioxide gas, a liquid phase constituted by the juice and a solid phase giving rise to a yeast head floating on the juice, and a periodic rising up of the juice in the head vat (2,60) by an increase of carbon dioxide gas pressure in the higher part of the fermetation vat (1), a spraying operation of the juice which is in the head vat (2,60) on the yeast head, and yeasting or sugaring operations, those operations being processed permanently under a controlled inert gas atmosphere as for example carbon dioxide, characterised by the fact that yeasting or sugaring operations are realised directly in the head vat (2,60).

## Patentansprüche

1. Tank zur Weinbereitung, bestehend aus einem unteren Tank (1) zur Gärung und einem kleineren oberen Tank (2, 60) untereinander kommunizierend durch eine Öffnung zur Reinigung (4, 56), verschließbar, beide untereinander verbunden durch eine Säule (5) für das Aufsteigen des Saftes aus dem Gärungstank (1) in den kleineren Tank (2, 60), charakterisiert dadurch, daß sie Wenigstens ein Klappenventil (20) enthält, das in automatischer und zyklischer Weise die Verbindung regelt zwischen dem Gärungstank (1) und dem kleinen Tank (2, 60) und besteht aus:
- einer fest installierten Vorrichtung (21,22,23), die an der Reinigungsöffnung (4,56) angebracht ist und einen Haltepunkt (25) für das Ventil darstellt,
- einer beweglichen Einrichtung (28,29), die sich vertikal bewegt, kooperierend mit besagtem Haltepunkt (25) des Ventils,
- einem beweglichen schwimmenden Teil (Schwimmer) (35, 35a), der seine Position ebenfalls vertikal verändert
- Abdichtungsmaßnahmen (32) zwischen beweglicher Einrichtung (28,29) und dem beweglichen Schwimmer (35, 35a),
- Mittel zur Fixierung (31,41) der beweglichen Einrichtung (28,29) auf dem Ruhepunkt des Ventils (25), abhängig von der Höhe des Saftes im kleinen Tank (2, 60), angezeigt durch besagten Schwimmer (35,35a).

2. Tank zur Weinbereitung nach Forderung 1, dadurch charakterisiert, daß die fest installierte Vorrichtung folgende Teile aufweist: zum einen in der unteren Partie ein ringförmiges Teil (23), auf die Reinigungsöffnung (4) passend und mit einer Ringdichtung (25) ausgestattet, die als Haltepunkt für das Ventil dient, und zum andern ein röhrenförmiges Teil (21), das auf besagtem Haltepunkt des Ventils angebracht ist und ein Führungsorgan für die bewegliche Einrichtung (28,29) bildet.

3. Tank zur weinbereitung gemäß den Forderungen 1 und 2, charakterisiert dadurch, daß das röhrenförmige Teil (21) der fest installierten Vorrichtung mit einem Anschlag (26) ausgerüstet ist, in der Höhe regulierbar auf besagtem röhrenförmigen Teil (21) und als Mittel zum unteren Anschlag der beweglichen Einrichtung (28,29) und als Mittel (26a) zur Führung des Schwimmers (35-35a) dient.

4. Tank zur Weinbereitung gemäß den Forderungen 1 und 2, charakterisiert dadurch, daß die bewegliche Einrichtung in ihrer unteren Partie ein kegelförmig abgestumpftes Teil (28) enthält, kooperierend mit der ringförmigen Dichtung (25), die den Haltepunkt für das Ventil bildet, und sich fortsetzend in einem Tubus (29), der im Innern des röhrenförmigen Teils (21) der fest installierten Vorrichtung gleitet.

5. Tank zur Weinbereitung gemäß den Forderungen 1, charakterisiert dadurch, daß der Schwimmer (35) sich zusammensetzt aus zwei zylindrischen konzentrischen Hüllen (36,37), im unteren Teil geöffnet und im oberen Teil verschlossen durch ein flaches Schlußstück (38), das in seiner Mitte eine ringförmige Öffnung (40) enthält.

6. Tank zur Weinbereitung gemäß den Forderungen 1, charakterisiert dadurch, daß der Schwimmer (35a) aus einer zylindrischen Hülle (37a) besteht, offen in ihrer unteren Partie und verschlossen oben durch ein flaches Schlußstück (38a), das in der Mitte eine ringförmige Öffnung aufweist (40), und außerdem aus zwei voneinander unabhängigen schwimmenden Elemen -ten (36a,36b), die auf der zylindrischen Hülle (37a) angebracht sind, wobei das eine (36a) der beiden schwimmenden Elemente das Gewicht des Schwimmers (35a) kompensiert und das andere (36b) in regulierbarer Weise die Öffnung der beweglichen Einrichtung (28,29) sicherstellt, dem Höhenstand des Saftes im kleinen Tank (2, 60) angepaßt.

7. Tank zur Weinbereitung gemäß den Forderungen 6, charakterisiert dadurch, daß das schwimmende Element (36a), das am Schwimmer (35a) selbst dessen Gewicht kompensieren soll, an der unteren Partie der zylindrischen Hülle (37a) befestigt ist.

8. Tank zur Weinbereitung gemäß einer der Forderungen 1 bis 7, charakterisiert dadurch, daß die Abdichtung (32) an der oberen Partie des Tubus (29) der beweglichen Einrichtung (28,29) plaziert ist und die ringförmige Öffnung (40) des beweglichen Schwimmers (35-35a) verschließt bei Verschlußstellung der Reinigungsöffnung (4) durch besagte bewegliche Einrichtung (28,29).

9. Tank zur Weinbereitung gemäß einer der Forderungen 1 bis 7, charakterisiert dadurch, daß die Mittel der Fixierung der beweglichen Einrichtung (28,29) auf dem Haltepunkt des Ventils (25) aus einem ersten permanenten Magneten (41), verantwortlich für den Schwimmer (35-35a), bestehen und aus einem zweiten permanenten Magneten (31), verantwortlich für besagte bewegliche Einrichtung (28,29).

10. Tank zur Weinbereitung gemäß einer der Forderungen 1 bis 9, charakterisiert dadurch, daß die Abdichtung aus einer Dichtung (32) besteht, die zwischen den beiden Magneten (31,41) plaziert ist.

11. Tank zur Weinbereitung gemäß einer der Forderungen 1 bis 10, charakterisiert dadurch, daß das automatische Klappenventil (20) auf eine bewegliche Scheidewand (50) montiert ist, die in der Höhe regulierbar ist und die einen unteren Hohlraum, aus dem der Gärungstank (1) besteht, von einem oberen Hohlraum, aus dem der kleinere Tank (2) besteht, abgrenzt.

12. Tank zur Weinbereitung gemäß einer der Forderungen 1 bis 10, charakterisiert dadurch, daß das automatische Klappenventil (20) in einem unabhängigen kleinen Tank (60) montiert ist, der zu einem existierenden Gärungstank (1) paßt.

13. Vorgang der Weinbereitung unter Benutzung eines Tanks gemäß der Forderungen 1 bis 12, der insbesondere einen Gärungsprozeß umfaßt, unter Einführung der Traubenerntemasse in einen Gärungstank (1) mit Bildung von Kohlendioxyd, mit einer flüssigen Phase, bestehend aus dem Saft, und einer festen Phase, die aus dem Hut der auf dem Saft schwimmenden Schalen besteht; der Vorgang der Weinbereitung soll periodisch einen Prozeß der Hochführung des Saftes in den kleineren Tank (2, 60) umfassen, durch Erhöhung des Drucks des Kohlendioxyds im oberen Teil des Gärungstanks (1), ferner einen Prozeß der Berieselung des Schalenhutes durch den Saft, der im besagten kleineren Tank (2, 60) enthalten ist, und ferner Prozesse von Hefe- und Zuckerzusatz. Besagte Prozesse werden ausgeführt unter permanent kontrollierter Atmosphäre von Edelgas wie z.B. Kohlendioxyd, dadurch charakterisiert, daß die Prozesse der Zuführung von Hefe und Zucker direkt im kleineren Tank (2, 60) durchgeführt werden.
